# EUROPEAN PATENT SPECIFICATION

(11) **EP 2 624 507 B1**
(45) Date of publication and mention of the grant of the patent: **08.10.2014**
(21) Application number: 11835521.3
(22) Date of filing: 15.06.2011
(51) Int. Cl.: H04L 12/721

(54) **PSEUDO-WIRE ROUTING DIFFUSION METHOD AND DEVICE**
PSEUDODRAHT-ROUTING-DIFFUSIONSVERFAHREN UND -VORRICHTUNG
PROCÉDÉ ET DISPOSITIF DE DIFFUSION DE ROUTAGE À PSEUDO-CÂBLE

(30) Priority: 26.10.2010 CN 201010526452
(43) Date of publication of application: 07.08.2013
(73) Proprietor: Huawei Technologies Co., Ltd., Shenzhen, Guangdong 518129 (CN)
(72) Inventor: XU, Weiping, Shenzhen Guangdong 518129 (CN)
(74) Representative: Haley, Stephen
(86) International application number: PCT/CN2011/075749
(87) International publication number: WO 2012/055247

(56) References cited:
- CN-A- 101 039 222
- CN-A- 101 299 707
- CN-A- 101 316 260
- CN-A- 101 656 673
- US-A1- 2005 238 049
- US-A1- 2009 285 089
- US-A1- 2010 054 264

## Description

### FIELD OF THE INVENTION

The present invention relates to the field of communications technologies, and in particular, to a method and an equipment for diffusing a pseudowire route.

### BACKGROUND OF THE INVENTION

A pseudowire (PseudoWire, PW) is a mechanism of carrying key elements of an emulation service from a provider edge (Provider Edge, PE) to another one or more PEs through a packet switching network (Packet Switching Network, PSN). In most cases, a single-segment pseudowire (Single-Segment PseudoWire, SS-PW) may meet carrying requirements. However, in a case that a signaling connection or a tunnel fails to be established between two PEs or signaling on two PEs is different, a multi-segment pseudowire (Multi-Segment PseudoWire, MS-PW) is required to complete the carrying. When a multi-segment PW is established, an access equipment, such as a digital subscriber line access multiplexer (Digital Subscriber Line Access Multiplexer, DSLAM), needs to diffuse a PW route to each node equipment in the network, so that the access equipment (such as the DSLAM) and a switching equipment (Switching PE, S-PE) may automatically find a destination node equipment according to routing information, thereby completing data switching.

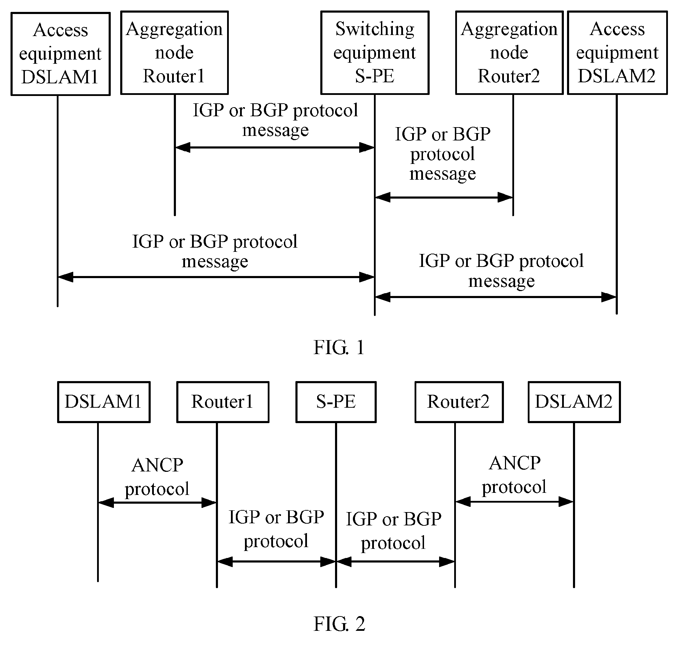

In the prior art, a method for PW route diffusion is as shown in FIG. 1, where an access equipment (such as a DSLAM1) adopts an Interior Gateway Protocol (Interior Gateway Protocol, IGP) message or a Multiple Protocol Border Gateway Protocol (Multiple Protocol Border Gateway Protocol, MP-BGP) message to send a PW route of the access equipment to a switching equipment S-PE; likewise, an aggregation node equipment (such as a router Router1) also adopts an IGP protocol message or an MP-BGP protocol message to diffuse a PW route of the aggregation node equipment to the switching equipment S-PE; after receiving the PW route, the switching equipment S-PE adopts IGP protocol messages or MP-BGP protocol messages to diffuse the PW route to other node equipments (such as a router Router2 and an access equipment DSLAM2) in the network; and one or more other node equipments (such as Router2 and access equipmentDSLAM2) extract the PW route from the IGP protocol messages or the MP-BGP protocol messages, thereby completing diffusion of the PW route in the network. The access equipment is generally a layer 2 equipment. However, in a multi-segment PW scenario, to support PW route diffusion, the access equipment needs to upgrade a control plane to layer 3, which not only increases complexity of the access equipment, but also increases the burden of the access equipment.

US patent application US2009/285089 Al discloses a first PE negotiates a pseudowire with a second PE, the pseudowire is uniquely identifiable between the first and second PE with a unique pseudowire identifier. The first PE receives OAM packets each including a pseudowire identifier form the second PE over the negotiated pseudowire. If an OAM packet is received with a pseudowire identifier that does not match the negotiated pseudowire, the first PE determines a data plane fault is associated with the pseudowire on the second PE. However, if the OAM packets include the pseudowire identifier that matches the negoitated pseudowire, the control and data plane association of the second PE is validated.

### SUMMARY OF THE INVENTION

The technical problem to be solved in embodiments of the present invention is to provide a method, a system and an aggregation node equipment for diffusing a pseudowire route, so as to reduce the complexity of the access equipment.

An embodiment of the present invention provides a method for diffusing a pseudowire route, including:
receiving a non-routing protocol message sent by an access equipment, where the non-routing protocol message is a layer 2 management protocol message carrying port information of the access equipment;
searching, according to the port information carried in the non-routing protocol message, for an access circuit identifier corresponding to the port information in a pre-configured mapping relation between port information and an access circuit identifier, and encapsulating the access circuit identifier, together with a global identifier and a prefix of the access equipment, into attachment individual identifier information as a pseudowire route of the access equipment; and
generating, according to the pseudowire route, a routing protocol message carrying the pseudowire route, and sending the routing protocol message to a switching equipment.

Correspondingly, an embodiment of the present invention further provides an aggregation node equipment, including:
a receiving module, configured to receive a non-routing protocol message sent by an access equipment, where the non-routing protocol message is a layer 2 management protocol message carrying port information;
an obtaining module, configured to obtain a pseudowire route of the access equipment according to the non-routing protocol message received by the receiving module;
a generating module, configured to generate, according to the pseudowire route obtained by the obtaining module, a routing protocol message carrying the pseudowire route; and
a sending module, configured to send the routing protocol message generated by the generating module to a switching equipment; where
the obtaining module includes:
   a searching unit, configured to search for an access circuit identifier corresponding to the port information in a pre-configured mapping relation between port information and an access circuit identifier according to the port information carried in the non-routing protocol message ; and
   an encapsulating unit, configured to encapsulate the access circuit identifier, together with a global identifier and a prefix of the access equipment, into a pseudowire route of the access equipment.

In the embodiments of the present invention, an aggregation node equipment receives a non-routing protocol message sent by an access equipment, where the non-routing protocol message carries port information of the access equipment, obtains the pseudowire route according to the non-routing protocol message, generates a routing protocol message carrying the pseudowire route, and sends the routing protocol message to a switching equipment, so that the switching equipment diffuses the pseudowire route, which prevents the access equipment from sending the routing protocol message and makes the access equipment need to maintain only the pseudowire route of the access equipment, thereby implementing transmission of the pseudowire route in a layer 2 network, and reducing complexity of the access equipment.

### BRIEF DESCRIPTION OF THE DRAWINGS

To illustrate the technical solutions according to the embodiments of the present invention or in the prior art more clearly, the accompanying drawings to be used in the embodiments are briefly introduced in the following. Apparently, the accompanying drawings in the following description are only some embodiments of the present invention, and persons of ordinary skill in the art can derive other drawings from the accompanying drawings without creative efforts.
FIG. 1 is a schematic diagram of distributing a pseudowire route of a multi-segment pseudowire in the prior art;
FIG. 2 is a schematic diagram of diffusing a PW route according to Embodiment 1 of the present invention;
FIG. 3 is a flowchart of a method for diffusing a pseudowire route according to Embodiment 1 of the present invention;
FIG. 4 is a flowchart of a method for diffusing a pseudowire route according to Embodiment 2 of the present invention;
FIG. 5 is a schematic structural diagram of an ANCP extension field according to Embodiment 2 of the present invention;
FIG. 6 is a schematic structural diagram of an ETH OAM extension field according to Embodiment 2 of the present invention;
FIG. 7 is a flowchart of a method for diffusing a pseudowire route according to Embodiment 3 of the present invention;
FIG. 8 is a schematic structural diagram of an aggregation node equipment according to Embodiment 4 of the present invention;
FIG. 9 is a schematic structural diagram of a system for diffusing a pseudowire route according to Embodiment 5 of the present invention;
FIG. 10 is a schematic structural diagram of another system for diffusing a pseudowire route according to Embodiment 5 of the present invention; and
FIG. 11 is a schematic structural diagram of still another system for diffusing a pseudowire route according to Embodiment 5 of the present invention.

### DETAILED DESCRIPTION OF THE EMBODIMENTS

The technical solutions in the embodiments of the present invention will be clearly and completely described in the following with reference to the accompanying drawings in the embodiments of the present invention. It is obvious that the embodiments to be described are only a part rather than all of the embodiments of the present invention. All other embodiments obtained by persons of ordinary skill in the art based on the embodiments of the present invention without creative efforts shall fall within the protection scope of the present invention.

Embodiments of the present invention provide a method, a system and an aggregation node equipment for diffusing a pseudowire route, so as to reduce complexity and burdens of an access equipment. The embodiments are respectively described in detail in the following.

### Embodiment 1

Referring to FIG. 2, a segment from an access equipment DSLAM1 to an aggregation node equipment Router1 and a segment from an access equipment DSLAM2 to an aggregation node equipment Router 2 are generally referred to as an access segment. In the access segment, a non-routing protocol may be adopted for message transmission. For example, distributing a PW route via a particular configuration protocol of an access equipment may reduce complexity and burdens of the access equipment.

For example, an access equipment, such a DSLAM1 and a DSLAM2, may adopt a particular configuration protocol, such as the Access Node Control Protocol (Access Node Control Protocol, ANCP) or the Ethernet Operation, Administration and Maintenance (Ethernet Operation, Administration and Maintenance, ETH OAM) protocol to implement diffusion of the PW route of the access equipment. Generally, the ANCP protocol is used in a digital subscriber line (Digital Subscriber Line, DSL) access scenario or an Ethernet access scenario, and the ETH OAM protocol is used in a gigabit-capable passive optical network (Gigabit-Capable PON, GPON) access scenario. However, other cases are not excluded. For example, the ETH OAM protocol may also be used in a DSL access scenario, an Ethernet access scenario or an Ethernet passive optical network (Ethernet Passive Optical Network, EPON) access scenario.

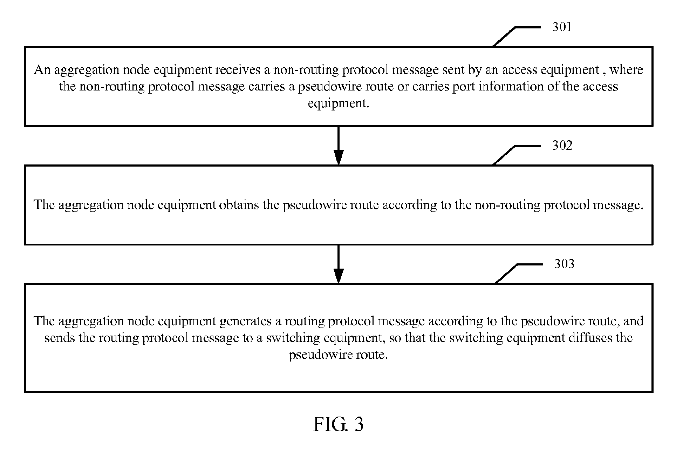

FIG. 3 shows a basic process of a method for diffusing a pseudowire route according to the first embodiment of the present invention, where the method for diffusing a pseudowire route according to this embodiment includes:
Step 301: An aggregation node equipment receives a non-routing protocol message originated from an access equipment, where the non-routing protocol message carries a pseudowire route or carries port information of the access equipment.

In an optional way, the access equipment may maintain a pseudowire routing table. The access equipment may send a non-routing protocol message carrying the pseudowire route to the aggregation node equipment.

In another optional way, the access equipment does not maintain its own pseudowire routing table, and instead, the aggregation node equipment maintains a pseudowire routing table. The access equipment sends the aggregation node equipment a non-routing protocol message carrying the port information of the access equipment.

In the embodiment of the present invention, the foregoing non-routing protocol message is a layer 2 management protocol message, specifically, an ANCP protocol message or an ETH OAM protocol message.
Step 302: The aggregation node equipment obtains the pseudowire route according to the non-routing protocol message.

In an optional way, if the non-routing protocol message received by the aggregation node equipment carries the pseudowire route, the aggregation node equipment directly obtains the pseudowire route from the non-routing protocol message.

In an optional way, if the non-routing protocol message received by the aggregation node equipment carries the port information of the access equipment, where the port information may be an access loop identifier or a circuit identifier, the aggregation node equipment may search, in a pre-configured mapping relation between port information and an access circuit identifier (Access Circuit Identifier, AC ID) according to the port information, for an AC ID corresponding to the port information, and encapsulate the AC ID, together with a global identifier (Global ID) and a prefix (Prefix) of the access equipment, into attachment individual identifier (Attachment Individual Identifier, AII) information, that is, a pseudowire route.
Step 303: The aggregation node equipment generates a routing protocol message according to the pseudowire route, and sends the routing protocol message to a switching equipment, so that the switching equipment diffuses the pseudowire route.

The aggregation node equipment transmits the message carrying the pseudowire route to an S-PE via the MP-BGP protocol or the IGP protocol, and then the S-PE diffuses the pseudowire route to one or more other node equipments via the MP-BGP protocol or the IGP protocol.

In the embodiment of the present invention, an aggregation node equipment receives a non-routing protocol message originated from an access equipment, where the non-routing protocol message carries a pseudowire route or carries port information of the access equipment, obtains the pseudowire route according to the non-routing protocol message, generates a routing protocol message carrying the pseudowire route, and sends the routing protocol message to a switching equipment, so that the switching equipment diffuses the pseudowire route, which prevents the access equipment from sending a routing protocol message and makes the access equipment need to maintain only the pseudowire route of the access equipment, thereby implementing transmission of the pseudowire route in a layer 2 network, and reducing complexity of the access equipment.

### Embodiment 2

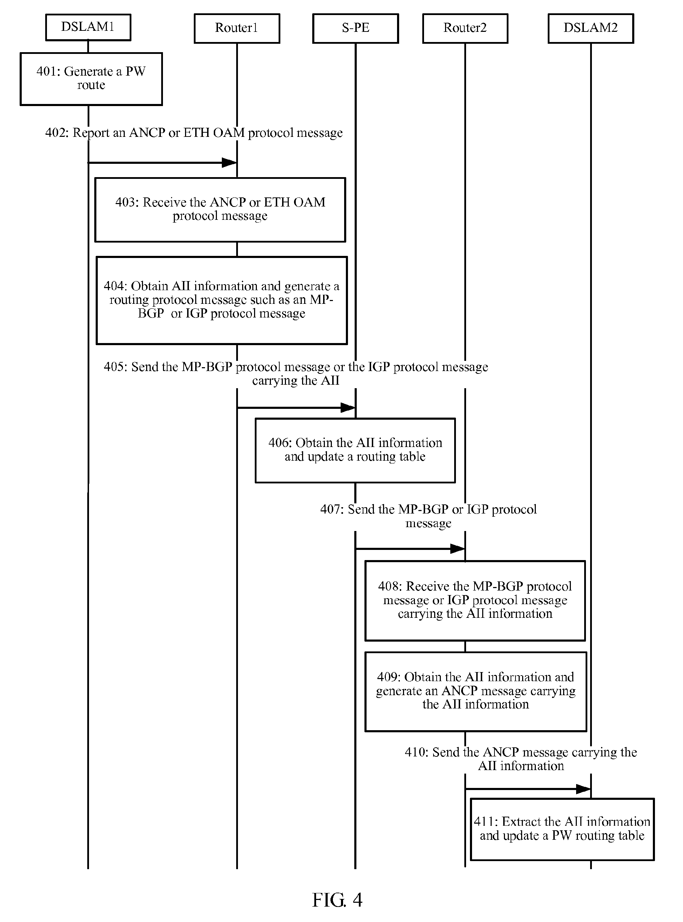

FIG. 4 is a flowchart of a method for diffusing a pseudowire route according to Embodiment 2 of the present invention. In this embodiment, a specially configured non-routing protocol, such as an ANCP protocol or an ETH OAM protocol is adopted to implement diffusion of a PW route of an access equipment (such as a DSLAM). The schematic diagram of diffusing a PW route according to this embodiment is the same as FIG. 2. Generally, the ANCP protocol is used in a DSL access scenario or an Ethernet access scenario, and the ETH OAM protocol is used in a GPON access scenario. However, other cases are not excluded. For example, the ETH OAM protocol may also be used in a DSL access scenario, an Ethernet access scenario or an EPON access scenario.

The DSL access scenario is used as an example in the following, and specific steps of the method for diffusing a pseudowire route are:
Step 401: An access equipment DSLAM1 enables a PW routing function, and encapsulates a Global ID and a Prefix of the access equipment DSLAM1, and an AC ID into AII information, that is, a PW route.
Step 402: The access equipment DSLAM1 reports to an aggregation node equipment Router1 via a particularly configured non-routing protocol message, such as an ANCP protocol message or an ETH OAM protocol message, which carries the AII information (that is, the PW route).

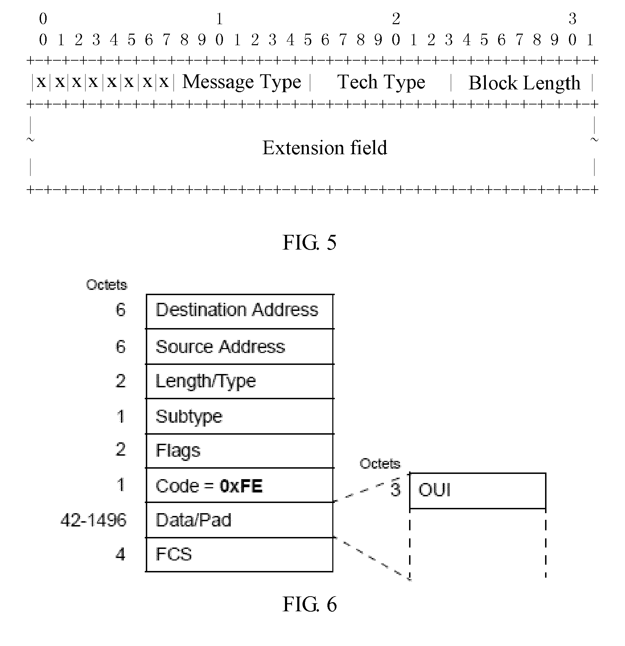

The ANCP protocol adopts a Global System for Mobile Communications (Global System for Mobile Communications, GSM) protocol to implement topology discovery, line configuration, and operation, administration and maintenance (Operation, Administration and Maintenance, OAM) functions. An extension field may be added to the ANCP protocol based on the GSM version 3 protocol, where the extension field adopts a type, length, value (Type, Length, Value, TLV) format, and may be used to implement topology discovery, line configuration and OAM functions and further used for a newly added function. The format of the extension field is as shown in FIG. 5. In this embodiment, the extension field is used to implement transmission of the AII information (that is, PW routing) in the ANCP protocol message. To implement the content of the present invention, the Message Type is defined as a new type, for example, the new type may be named as a PW route type. A TLV attribute is provided for carrying AII information with an extensible length.

A basic structure of an ETH OAM protocol message is as shown in FIG. 6, where the value of code is 0xFE which may be defined by an equipment supplier, and the code supports a special function. A code field is used to implement transmission of AII information (that is, a PW route) in the ETH OAM protocol message. To implement the present invention, a new organizationally unique identifier (Organizationally Unique Identifier, OUI) is defined, and may named as, for example, a PW routing OUI, having the TLV attribute and carrying AII information with a variable length.
Step 403: The aggregation node equipment Router1 receives the ANCP protocol message or the ETH OAM protocol message carrying the AII information (that is, the PW route).
Step 404: The aggregation node equipment Router1 extracts the AII information (that is, the PW route) from the ANCP protocol message or the ETH OAM protocol message, and generates an MP-BGP protocol message or an IGP protocol message carrying the AII information (that is, the PW route).

In an optional way, after extracting the AII information (that is, the PW route) from the ANCP protocol message or the ETH OAM protocol message, the aggregation node equipment Router1 may update a local routing table according to the AII information (that is, the PW route).
Step 405: The aggregation node equipment Router1 sends the AII information (that is, the PW route) to a switching equipment S-PE via the MP-BGP protocol message or the IGP protocol message. According to actual requirements, an IP edge equipment may organize multiple pieces of AII information into a group, uniformly encapsulates the group of AII information into a single message, and sends the message to the S-PE, so as to improve protocol efficiency.
Step 406: The switching equipment S-PE obtains the AII information (that is, the PW route) according to the received message, and updates the AII information (that is, the PW route) into a PW routing table.
Step 407: The switching equipment S-PE sends the MP-BGP protocol message or the IGP protocol message carrying the AII information (that is, the PW route) to an aggregation node equipment Router2.
Step 408: The aggregation node equipment Router2 receives the MP-BGP protocol message or the IGP protocol message carrying the AII information (that is, the PW route).
Step 409: The aggregation node equipment Router2 obtains the AII information (that is, PW routing) from the MP-BGP protocol message or the IGP protocol message, and generates, according to the AII information (that is, the PW route), an ANCP protocol message (a specially configured non-routing protocol message) carrying the AII information (that is, the PW route).

It should be noted that, actually the aggregation node equipment may enable the AII information (that is, the PW route) to be used in a local PW service. Therefore, a routing table entry corresponding to the AII information may also be generated in a local PW routing table.

In an optional way, after extracting the AII information (that is, the PW route), the aggregation node equipment Router2 may update the local routing table according to the AII information (that is, the PW route).
Step 410: The aggregation node equipment Router2 sends the ANCP protocol message carrying the AII information (that is, the PW route) to an access equipment DSLAM2.
Step 411: After receiving the ANCP protocol message carrying the AII information (that is, the PW route), the access equipment DSLAM2 extracts the AII information from the ANCP protocol message, updates a PW routing table, and designates that a next hop of the PW route is the switching equipment S-PE.

The foregoing steps are repeated in each switching equipment, access equipment and aggregation node equipment on the network, which implements diffusion of the pseudowire route between each node on the network.

In Embodiment 2 of the present invention, the aggregation node equipment Router1 may further receive a second routing protocol message (such as an IGP protocol message or an MP-BGP protocol message) originated from the switching equipment S-PE, where the second routing protocol message carries a second pseudowire route of a second access equipment DSLAM2. The aggregation node equipment Router1 may obtain the second pseudowire route according to the foregoing second routing protocol message; and generate, based on the obtained second pseudowire route, a second non-routing protocol message (a layer 2 management protocol message such as an ANCP protocol message or an ETH OAM protocol message) carrying the second pseudowire route. The aggregation node equipment Router1 may send the second non-routing protocol message to the access equipment DSLAM2.

In the embodiment of the present invention, an aggregation node equipment receives a non-routing protocol message sent by an access equipment, where the non-routing protocol message carries a pseudowire route or carries port information of the access equipment, obtains the pseudowire route according to the non-routing protocol message, generates a routing protocol message carrying the pseudowire route and sends the routing protocol message to a switching equipment, so that the switching equipment diffuses the pseudowire route, which prevents the access equipment from sending the routing protocol message and makes the access equipment need to maintain only the pseudowire route of the access equipment, thereby implementing transmission of the pseudowire route in a layer 2 network, and reducing complexity of the access equipment.

### Embodiment 3

In Embodiment 2, the PW routing of the access equipment needs to be maintained and distributed by the access equipment. For example, the PW route of DSLAM1 needs to be maintained and distributed by DSLAM1, and a PW routing table is maintained in DSLAM1. In this embodiment, an aggregation node equipment serves as an agent to maintain the PW route of an access equipment. Between the aggregation node equipment and the access equipment, maintenance by the aggregation node equipment for the PW route of the access equipment is controlled via an existing configuration protocol (such as an ANCP protocol or an ETH OAM protocol).

In this embodiment, an aggregation node equipment Router1 maintains PW route of a DSLAM1 and also maintains the PW route of the Router1. The ANCP protocol or the ETH OAM protocol is adopted in the following to implement diffusion of the PW route of the DSLAM1. Generally, the ANCP protocol is used in a DSL or an Ethernet access scenario, and the ETH OAM protocol may be used in an EPON access scenario. However, other cases are not excluded. For example, the ETH OAM protocol may also be used in a DSL, an Ethernet or a GPON access scenario.

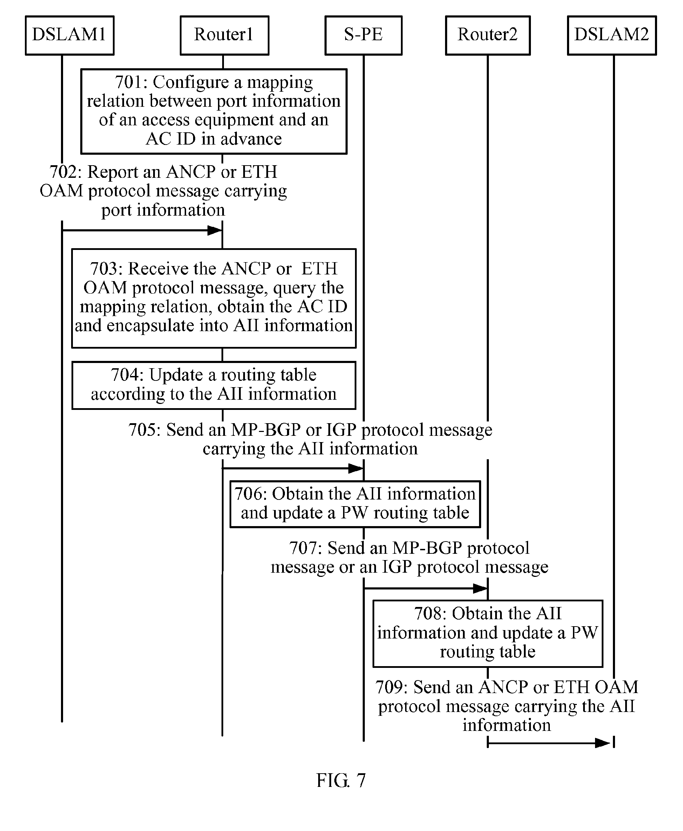

FIG. 7 is a flowchart of a method for diffusing a pseudowire route according to this embodiment, where the method for diffusing a pseudowire route includes the following steps.
Step 701: Configure a mapping relation between port information of an access equipment and an AC ID in an aggregation node equipment in advance.

The mapping relation between the port information of the access equipment and the AC ID may be manually configured through an operation personnel in a form of a configuration file list in the aggregation node equipment in advance.

The port information of the access equipment may include port information of a DSL or an optical network unit (Optical Network Unit, ONU), and/or port information of an optical line terminal (Optical Line Terminal, OLT). The AC ID may be port information or may be a logical number of port information. The port information of the DSL or the ONU may be an access loop identifier (Access Loop Identifier, ALI) or a circuit ID (Circuit ID). For example:

When line transmission of the network is based on an Asynchronous Transfer Mode (Asynchronous Transfer Mode, ATM) protocol, the "port information of the DSL or the ONU" is configured as DSLAM or ONU ID atm slot2/port2:vpi.vci.

When the line transmission of the network is based on the ETH protocol, the "port information of the DSL or the ONU" is configured as DSLAM or ONU ID eth slot2/port2[:vlan-id].

The foregoing port information of the OLT may be: Access-Node-Identifier slot1/port1 [:vlan-id].

Access-Node-Identifier is an identifier of the OLT, and slot1/port1 is a combination or multiple combinations of a chassis (chassis) number, a rack (rack) number, a frame (frame) number, a slot (slot) number, a sub-slot (sub-slot) number and a port (port) number on the OLT. ONU ID is the identifier of the ONU, and slot2/port2 is a combination or multiple combinations of a chassis (chassis) number, a rack (rack) number, a frame (frame) number, a slot (slot) number, a sub-slot (sub-slot) number and a port (port) number on the ONU; and vpi.vci is a virtual path identifier and a virtual channel identifier on the DSL line, and VLAN ID is a virtual local area network identifier.

The "port information of the DSL or the ONU" may also be information of a specific class of ports: ATM cell, time division multiplex (Time Division Multiplex, TDM) time slot, Ethernet (ETH) frame or a network protocol (Internet Protocol, IP) packet. For example, the port information of the ONU may include a virtual path identifier (Virtual Path Identifier, VPI) and a virtual channel identifier (Virtual Channel Identifier, VCI) of the ATM, a TDM timeslot number, a media access control (Media Access Control, MAC) address, a virtual local area network ID (Virtual Local Area Network ID, VLAN ID), an Ethernet priority, an IP address and a differentiated services code point (Differentiated Services Code Point, DSCP).
Step 702: The access equipment (such as a DSLAM1) reports to the aggregation node equipment via an ANCP protocol message or an ETH OAM protocol message carrying port information.
Step 703: The aggregation node equipment (such as Router1) queries the pre-configured mapping relation between the port information and the AC ID according to the received port information to obtain an AC ID corresponding to the port information, and encapsulates the AC ID, together with a Global ID and a Prefix of the access equipment, into AII information (that is, PW routing).
Step 704: The aggregation node equipment updates a PW routing table according to the generated AII information.
Step 705: The aggregation node equipment transmits the AII information (that is, the PW route) to a switching equipment S-PE via an MP-BGP protocol message or an IGP protocol message. According to actual requirements, the aggregation node equipment may organize multiple pieces of AII information into a group and send the group of information to the S-PE, so as to improve protocol efficiency.
Step 706: The switching equipment S-PE obtains the AII information according to the received message and updates a PW routing table.
Step 707: The switching equipment S-PE sends the AII information (that is, PW routing) to an aggregation node equipment Router2 via an MP-BGP protocol message or an IGP protocol message.
Step 708: The aggregation node equipment Router2 extracts the AII information (that is, PW routing) from the received MP-BGP protocol message or IGP protocol message and updates a PW routing table.
Step 709: The aggregation node equipment Router2 sends an ANCP protocol message or an ETH OAM protocol message carrying the AII information (that is, PW routing) to an access equipment DSLAM2, and the access equipment DSLAM2 extracts the AII information (that is, PW routing) and updates a PW routing table.

The aggregation node equipment and the switching equipment maintain the routing tables of the PW route, and the foregoing steps are repeated to complete diffusion of the pseudowire route in the network.

In Embodiment 3 of the present invention, the aggregation node equipment Router1 may further receive a second routing protocol message (such as an IGP protocol message or an MP-BGP protocol message) sent by the switching equipment S-PE, where the second routing protocol message carries second pseudowire route of the second access equipment DSLAM2. According to the second routing protocol message, the aggregation node equipment Router1 may obtain the second pseudowire route. The aggregation node equipment Router1 may generate, according to the obtained second pseudowire route, a second non-routing protocol message (a layer 2 management protocol message such as an ANCP protocol message or an ETH OAM protocol message) carrying the second pseudowire route, and send the second non-routing protocol message to the access equipment DSLAM2.

In the embodiment of the present invention, an aggregation node equipment receives a non-routing protocol message originated from an access equipment, where the non-routing protocol message carries a pseudowire route or carries port information of the access equipment, obtains the pseudowire route according to the non-routing protocol message, generates a routing protocol message carrying the pseudowire route and send the routing protocol message to a switching equipment, so that the switching equipment diffuses the pseudowire route, which prevents the access equipment from sending the routing protocol message and makes the access equipment need to maintain only the pseudowire route of the access equipment, thereby implementing transmission of the pseudowire route in a layer 2 network, and reducing complexity of the access equipment.

### Embodiment 4

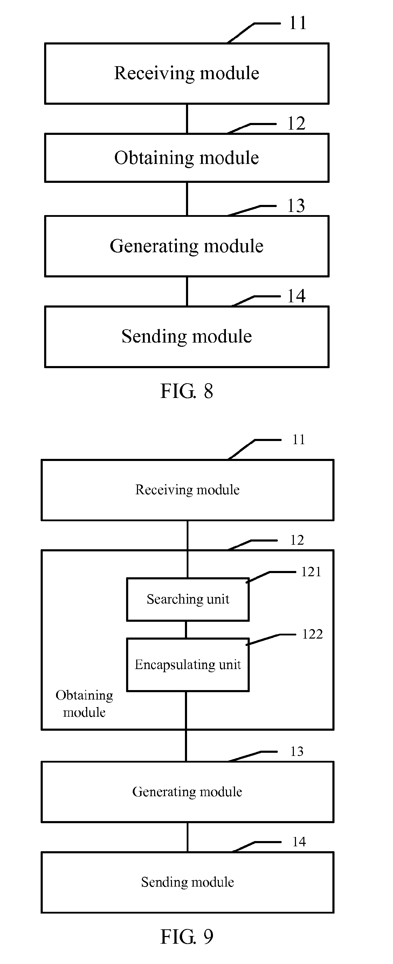

Referring to FIG. 8, FIG. 8 is a schematic structural diagram of an aggregation node equipment according to an embodiment of the present invention, for implementing the method for diffusing a pseudowire route according to the foregoing embodiments. The aggregation node equipment may include:
a receiving module 11, configured to receive a non-routing protocol message sent by an access equipment, where the non-routing protocol message carries a pseudowire route or carries port information of the access equipment;
an obtaining module 12, configured to obtain the pseudowire route according to the non-routing protocol message received by the receiving module 11;
a generating module 13, configured to generate, according to the pseudowire route obtained by the obtaining module 12, a routing protocol message carrying the pseudowire route; and
a sending module 14, configured to send the routing protocol message generated by the generating module 13 to a switching equipment, so that the switching equipment diffuses the pseudowire route.

The foregoing non-routing protocol message may be a layer 2 management protocol message, such as an ANCP protocol message or an ETH OAM protocol message.

In an optional embodiment, the foregoing obtaining module 12 may include:
a searching unit 121, configured to search, according to the port information carried in the non-routing protocol message, for an access circuit identifier corresponding to the port information from a pre-configured mapping relation between port information and an access circuit identifier, when the non-routing protocol message received by the receiving module 11 carries the port information; and
an encapsulating unit 122, configured to encapsulate the access circuit identifier found by the searching unit 121, together with a global identifier and a prefix of the access equipment, into the pseudowire route of the access equipment, and output the pseudowire route to the generating module 13, as shown in FIG. 9.

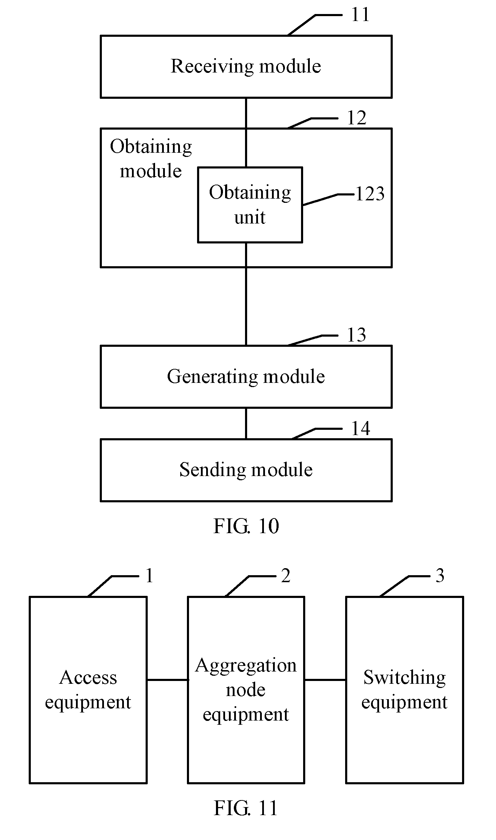

In another optional embodiment, the foregoing obtaining module 12 may include:
an obtaining unit 123, configured to directly extract the pseudowire route from the non-routing protocol message when the non-routing protocol message received by the receiving module 11 carries the pseudowire route, and output the pseudowire route to the generating module 13, as shown in FIG. 10.

Optionally, the receiving module 11 may be further configured to receive a second routing protocol message sent by the switching equipment, where the second routing protocol message carries second pseudowire route of a second access equipment.

Correspondingly, the obtaining module 12 may be further configured to obtain the second pseudowire route according to the second routing protocol message received by the receiving module 11.

Correspondingly, the generating module 13 may be further configured to generate, according to the second pseudowire route obtained by the obtaining module 12, a second non-routing protocol message carrying the second pseudowire route.

Correspondingly, the sending module 14 may be further configured to send the second non-routing protocol message generated by the generating module 13 to the foregoing access equipment.

The second non-routing protocol message may be a layer 2 management protocol message, such as an ANCP protocol message or an ETH OAM protocol message.

In the embodiment of the present invention, the receiving module 11 receives a non-routing protocol message sent by an access equipment, where the non-routing protocol message carries a pseudowire route or port information of the access equipment; according to the non-routing protocol message, the obtaining module 12 obtains the pseudowire route; the generating module 13 generates a routing protocol message carrying the pseudowire route; and the sending module 14 sends the routing protocol message to a switching equipment, so that the switching equipment diffuses the pseudowire route, which prevents the access equipment from sending the routing protocol message and makes the access equipment need to maintain the pseudowire route of the access equipment only, thereby implementing transmission of the pseudowire route on a layer 2 network, and reducing complexity of the access equipment.

### Embodiment 5

Referring to FIG. 11, FIG. 11 is a schematic structural diagram of a system for diffusing a pseudowire route according to an embodiment of the present invention, so as to implement the method for diffusing a pseudowire route according to the foregoing embodiments. The system for diffusing a pseudowire route includes:
an access equipment 1, configured to send a non-routing protocol message to an aggregation node equipment 2, where the non-routing protocol message carries a pseudowire route or port information of the access equipment 1;
the aggregation node equipment 2, configured to: receive the non-routing protocol message sent by the access equipment 1; according to the non-routing protocol message, extract the pseudowire route of the access equipment 1; and according to the pseudowire route, generate a routing protocol message carrying the pseudowire route, and send the routing protocol message to a switching equipment 3; and
the switching equipment 3, configured to receive the routing protocol message sent by the aggregation node equipment 2, extract the pseudowire route, and diffuse the pseudowire route to one or more other access equipments or aggregation node equipments.

The foregoing non-routing protocol message may be a layer 2 management protocol message, such as an ANCP protocol message or an ETH OAM protocol message.

In the embodiment of the present invention, the aggregation node equipment 2 receives a non-routing protocol message sent by the access equipment 1, where the non-routing protocol message carries a pseudowire route or port information of the access equipment 1, obtains the pseudowire route according to the non-routing protocol message, generates a routing protocol message carrying the pseudowire route, and sends the routing protocol message to the switching equipment 3, which prevents the access equipment 1 from sending the routing protocol message and makes the access equipment 1 need to maintain only the pseudowire route of the access equipment 1, thereby implementing transmission of the pseudowire route in a layer 2 network, and reducing complexity of the access equipment 1.

Persons of ordinary skill in the art may understand that all or part of the steps of the method according to the embodiments of the present invention may be implemented by a program instructing relevant hardware. The program may be stored in a computer readable storage medium. The storage medium may include: a flash disk, a read-only memory (Read-Only Memory, ROM), a random access memory (Random Access Memory, RAM), a magnetic disk or an optical disk.

The method, system and aggregation node equipment for diffusing a pseudowire route according to the embodiments of the present invention are introduced in detail above. The principle and implementation of the present invention are described herein through specific examples. The description about the foregoing embodiments is merely used to facilitate understanding of the method and core ideas of the present invention. Persons of ordinary skill in the art can make variations and modifications to the present invention in terms of the specific implementation manners and the application scope according to the ideas of the present invention. Therefore, the content of this specification shall not be construed as a limitation on the present invention.

## Claims

1. A method for diffusing a pseudowire route, comprising:
receiving a non-routing protocol message sent by an access equipment, wherein the non-routing protocol message is a layer 2 management protocol message carrying port information of the access equipment; searching, according to the port information carried in the non-routing protocol message, for an access circuit identifier corresponding to the port information from a pre-configured mapping relation between port information and an access circuit identifier, and encapsulating the access circuit identifier, together with a global identifier and a prefix of the access equipment into attachment individual identifier information as a pseudowire route of the access equipment;
generating, according to the pseudowire route, a routing protocol message carrying the pseudowire route, and
sending the routing protocol message to a switching equipment.

2. The method for diffusing a pseudowire route according to claim 1, wherein the layer 2 management protocol message is an Access Node Control Protocol message.

3. The method for diffusing a pseudowire route according to claim 1 or 2, wherein the routing protocol message is an Interior Gateway Protocol message or a Multiple Protocol Border Gateway Protocol message.

4. The method for diffusing a pseudowire route according to any one of claims 1 to 3, wherein the port information of the access equipment comprises: port information of an optical network unit, and/or port information of an optical line terminal.

5. An aggregation node equipment, comprising:
a receiving module, configured to receive a non-routing protocol message sent by an access equipment, wherein the non-routing protocol message is a layer 2 management protocol message carrying port information;
an obtaining module, configured to obtain pseudowire route of the access equipment according to the non-routing protocol message received by the receiving module;
a generating module, configured to generate, according to the pseudowire route obtained by the obtaining module, a routing protocol message carrying the pseudowire route; and
a sending module, configured to send the routing protocol message generated by the generating module to a switching equipment, so that the switching equipment diffuses the pseudowire route; wherein
the obtaining module comprises:
a searching unit, configured to search for an access circuit identifier corresponding to the port information from a pre-configured mapping relation between port information and an access circuit identifier according to the port information carried in the non-routing protocol message; and
an encapsulating unit, configured to encapsulate the access circuit identifier, together with a global identifier and a prefix of the access equipment, into the pseudowire route of the access equipment.

6. The aggregation node equipment according to claim 5, wherein the layer 2 management protocol message is an Access Node Control Protocol message.

7. The aggregation node equipment according to claim 5 or claim 6, wherein the routing protocol message is an Interior Gateway Protocol message or a Multiple Protocol Border Gateway Protocol message.

8. The aggregation node equipment according to any one of claims 5 to 7, wherein the port information of the access equipment comprises: port information of an optical network unit in a passive optical network, and/or port information of an optical line terminal in the passive optical network.

## Patentansprüche

1. Verfahren zum Verbreiten einer Pseudoverbindungstrecke, das Folgendes umfasst:
Empfangen einer Nichtlenkungsprotokollnachricht, die durch eine Zugangsvorrichtung gesendet wird, wobei die Nichtlenkungsprotokollnachricht eine Schicht-2-Managementprotokollnachricht ist, die Anschlussinformationen der Zugangsvorrichtung führt; Suchen gemäß den in der Nichtlenkungsprotokollnachricht geführten Anschlussinformationen nach einer Zugangsleitungskennung, die den Anschlussinformationen entspricht, aus einer vorkonfigurierten Abbildungsbeziehung zwischen Anschlussinformationen und einer Zugangsleitungskennung, und Einkapseln der Zugangsleitungskennung zusammen mit einer globalen Kennung und einem Präfix der Zugangsvorrichtung in individuelle Anhangskennungsinformationen als eine Pseudoverbindungstrecke der Zugangsvorrichtung;
Erzeugen einer Lenkungsprotokollnachricht, die die Pseudoverbindungstrecke führt, gemäß der Pseudoverbindungstrecke und
Senden der Lenkungsprotokollnachricht zu einer Vermittlungsvorrichtung.

2. Verfahren zum Verbreiten einer Pseudoverbindungstrecke nach Anspruch 1, wobei die Schicht-2-Managementprotokollnachricht eine Zugangsknotensteuerungsprotokollnachricht ist.

3. Verfahren zum Verteilen einer Pseudoverbindungstrecke nach Anspruch 1 oder 2, wobei die Lenkungsprotokollnachricht eine Innengateway-Protokollnachricht oder eine Mehrfachprotokoll-Grenzgateway-Protokollnachricht ist.

4. Verfahren zum Verbreiten einer Pseudoverbindungstrecke nach einem der Ansprüche 1 bis 3, wobei die Anschlussinformationen der Zugangsvorrichtung Folgendes umfassen: Anschlussinformationen einer optischen Netzeinheit und/oder Anschlussinformationen eines optischen Leitungsabschlusses.

5. Aggregationsknotenvorrichtung, die Folgendes umfasst:
ein Empfangsmodul, das konfiguriert ist, eine durch eine Zugangsvorrichtung gesendete Nichtlenkungsprotokollnachricht zu empfangen, wobei die Nichtlenkungsprotokollnachricht eine Schicht-2-Managementprotokollnachricht ist, die Anschlussinformationen führt;
ein Erhaltemodul, das konfiguriert ist, die Pseudoverbindungstrecke der Zugangsvorrichtung gemäß der durch das Empfangsmodul empfangenen Nichtlenkungsprotokollnachricht zu erhalten;
ein Erzeugungsmodul, das konfiguriert ist, gemäß der durch das Erhaltemodul erhaltenen Pseudoverbindungstrecke eine Lenkungsprotokollnachricht, die die Pseudoverbindungsstrecke führt, zu erzeugen; und
ein Sendemodul, das konfiguriert ist, die durch das Erzeugungsmodul erzeugte Lenkungsprotokollnachricht zu einer Vermittlungsvorrichtung zu senden, so dass die Vermittlungsvorrichtung die Pseudoverbindungstrecke verbreitet; wobei
das Erhaltemodul Folgendes umfasst:
eine Sucheinheit, die konfiguriert ist, nach einer Zugangsleitungskennung zu suchen, die den Anschlussinformationen entspricht, aus einer vorkonfigurierten Abbildungsbeziehung zwischen Anschlussinformationen und einer Zugangsleitungskennung gemäß den in der Nichtlenkungsprotokollnachricht geführten Anschlussinformationen; und
eine Verkapselungseinheit, die konfiguriert ist, die Zugangsleitungskennung zusammen mit einer globalen Kennung und einem Präfix der Zugangsvorrichtung in die Pseudoverbindungstrecke der Zugangsvorrichtung einzukapseln.

6. Aggregationsknotenvorrichtung nach Anspruch 5, wobei die Schicht-2-Managementprotokollnachricht eine Zugangsknotensteuerungsprotokollnachricht ist.

7. Aggregationsknotenvorrichtung nach Anspruch 5 oder Anspruch 6, wobei die Lenkungsprotokollnachricht eine Innengateway-Protokollnachricht oder eine Mehrfachprotokoll-Grenzgateway-Protokollnachricht ist.

8. Aggregationsknotenvorrichtung nach einer der Ansprüche 5 bis 7, wobei die Anschlussinformationen der Zugangsvorrichtung Folgendes umfassen:
Anschlussinformationen einer optischen Netzeinheit in einem passiven optischen Netz und/oder Anschlussinformationen eines optischen Leitungsabschlusses in dem passiven optischen Netz.

## Revendications

1. Procédé de diffusion de route pseudo-filaire, comprenant :
la réception d'un message de protocole de non-routage envoyé par un équipement d'accès, dans lequel le message de protocole de non-routage est un message de protocole de gestion de couche 2 acheminant des informations de ports de l'équipement d'accès ; la recherche, en fonction des informations de ports acheminées dans le message de protocole de non-routage, d'un identifiant de circuit d'accès correspondant aux informations de ports à partir d'une relation de correspondance préconfigurée entre des informations de ports et un identifiant de circuit d'accès, et
l'encapsulation de l'identifiant de circuit d'accès, en association avec un identifiant global et un préfixe de l'équipement d'accès, dans des informations d'identifiants individuels de rattachement en tant que route pseudo-filaire de l'équipement d'accès ; la génération, conformément à la route pseudo-filaire, d'un message de protocole de routage acheminant la route pseudo-filaire, et
l'envoi du message de protocole de routage à un équipement de commutation.

2. Procédé de diffusion de route pseudo-filaire selon la revendication 1, dans lequel le message de protocole de gestion de couche 2 est un message de Protocole de Commande de Noeud d'Accès.

3. Procédé de diffusion de route pseudo-filaire selon la revendication 1 ou 2, dans lequel le message de protocole de routage est un message de Protocole de Passerelle Intérieure ou un message de Protocole de Passerelle de Périphérie à Protocoles Multiples.

4. Procédé de diffusion de route pseudo-filaire selon l'une quelconque des revendications 1 à 3, dans lequel les informations de ports de l'équipement d'accès comprennent : des informations de ports d'une unité de réseau optique et/ou des informations de ports d'un terminal de ligne optique.

5. Equipement de noeud d'agrégation, comprenant :
un module de réception, configuré pour recevoir un message de protocole de non-routage envoyé par un équipement d'accès, dans lequel le message de protocole de non-routage est un message de protocole de gestion de couche 2 acheminant des informations de ports ;
un module d'obtention, configuré pour obtenir une route pseudo-filaire de l'équipement d'accès conformément au message de protocole de non-routage reçu par le module de réception ;
un module générateur, configuré pour générer, conformément à la route pseudo-filaire obtenue par le module d'obtention, un message de protocole de routage acheminant la route pseudo-filaire ; et
un module d'envoi, configuré pour envoyer le message de protocole de routage généré par le module générateur à un équipement de commutation, de manière à ce que l'équipement de commutation diffuse la route pseudo-filaire ; dans lequel
le module d'obtention comprend :
un module de recherche, configuré pour rechercher un identifiant de circuit d'accès correspondant aux informations de ports à partir d'une relation de correspondance préconfigurée entre des informations de ports et un identifiant de circuit d'accès conformément aux informations de ports acheminées dans le message de protocole de non-routage ; et
une unité d'encapsulation, configurée pour encapsuler l'identifiant de circuit d'accès, en association avec un identifiant global et un préfixe de l'équipement d'accès, dans la route pseudo-filaire de l'équipement d'accès.

6. Equipement de noeud d'agrégation selon la revendication 5, dans lequel le message de protocole de gestion de couche 2 est un message de Protocole de Commande de Noeud d'Accès.

7. Equipement de noeud d'agrégation selon la revendication 5 ou 6, dans lequel le message de protocole de routage est un message de Protocole de Passerelle Intérieure ou un message de Protocole de Passerelle de Périphérie à Protocoles Multiples.

8. Equipement de noeud d'agrégation selon l'une quelconque des revendications 5 à 7, dans lequel les informations de ports de l'équipement d'accès comprennent : des informations de ports d'une unité de réseau optique dans un réseau optique passif et/ou des informations de ports d'un terminal de ligne optique dans le réseau optique passif.
